(19) Europäisches Patentamt / European Patent Office / Office européen des brevets

(11) **EP 4 528 360 A1**

(12) **EUROPEAN PATENT APPLICATION**
published in accordance with Art. 153(4) EPC

(43) Date of publication:
**26.03.2025 Bulletin 2025/13**

(21) Application number: **23822940.5**

(22) Date of filing: **01.06.2023**

(51) International Patent Classification (IPC):
**G02B 27/09** $^{(2006.01)}$     **G02B 6/293** $^{(2006.01)}$

(52) Cooperative Patent Classification (CPC):
**G02B 6/293; G02B 27/09**

(86) International application number:
**PCT/CN2023/097770**

(87) International publication number:
**WO 2023/241371 (21.12.2023 Gazette 2023/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.06.2022 CN 202210674358**

(71) Applicant: **Huawei Technologies Co., Ltd.**
**Shenzhen, Guangdong 518129 (CN)**

(72) Inventors:
• **LU, Lizhen**
  **Shenzhen, Guangdong 518129 (CN)**
• **LI, Tenghao**
  **Shenzhen, Guangdong 518129 (CN)**
• **LI, Shiqiang**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **LIGHT BEAM SHAPING APPARATUS, LIGHT BEAM SHAPING METHOD AND WSS**

(57) A light beam shaping apparatus (10), a light beam shaping method, and a WSS are provided. The light beam shaping apparatus (10) includes a port assembly (101) and a first light beam shaping device (102), where the port assembly (101) includes an input port (101a) and/or output ports (101b, 101c, 101d, 101e, and 101f). The first light beam shaping device (102) is configured to perform phase adjustment on each input first light beam to adjust a beam waist width of each first light beam in a first direction and/or a beam waist width of each first light beam in a second direction, where the first direction is perpendicular to the second direction, and each first light beam comes from a corresponding input port (101a); and/or the first light beam shaping device (102) is configured to perform phase adjustment on each input second light beam to adjust a beam waist width of each second light beam in the first direction and/or a beam waist width of each second light beam in the second direction, and transmit each second light beam to a corresponding output port (101b, 101c, 101d, 101e, or 101f), where a transmission direction of the first light beam is opposite to a transmission direction of the second light beam.

FIG. 2

EP 4 528 360 A1

## Description

This application claims priority to Chinese Patent Application No. 202210674358.7, filed with the China National Intellectual Property Administration on June 15, 2022 and entitled "LIGHT BEAM SHAPING APPARATUS, LIGHT BEAM SHAPING METHOD, AND WSS", which is incorporated herein by reference in its entirety.

## TECHNICAL FIELD

This application relates to the field of optical communication, and in particular, to a light beam shaping apparatus, a light beam shaping method, and a WSS.

## BACKGROUND

As a key device for optical cross-connect, a wavelength selective switch (Wavelength Selective Switch, WSS) has advantages such as flexible grooming and ultra-large-capacity wavelength grooming, and plays a key role in constructing an optical network with an ultra-large system capacity and super node grooming. A WSS optical device includes four parts: a fiber array unit (Fiber Array Unit, FAU), an optical system, a dispersion element, and a switching engine. The FAU is configured to shape input and output light beams of an optical fiber, and is a key component in the WSS.

In conventional technologies, the FAU includes a fiber array (Fiber Array, FA), a spherical lens array (Spherical Lens Array, SLA), and a cylindrical lens array (Cylindrical Lens Array, CLA). The optical fiber is configured to receive a light beam and transmit a light beam, and the two micro lens arrays are configured to perform light beam shaping. Because the FA, the SLA, and the CLA are placed separately, the entire component is poorly integrated, and it is difficult to install and adjust the entire component.

## SUMMARY

Embodiments of this application provide a light beam shaping apparatus, a light beam shaping method, and a WSS. The light beam shaping apparatus has high integrity and low installation and adjustment difficulty.

According to a first aspect, an embodiment of this application provides a light beam shaping apparatus. The light beam shaping apparatus includes a port assembly and a first light beam shaping device, where the port assembly includes an input port and/or an output port. The first light beam shaping device is configured to perform phase adjustment on each input first light beam to adjust a beam waist width of each first light beam in a first direction and/or a beam waist width of each first light beam in a second direction, where the first direction is perpendicular to the second direction, and each first light beam comes from a corresponding input port; and/or the first light beam shaping device is configured to perform phase adjustment on each input second light beam to adjust a beam waist width of each second light beam in the first direction and/or a beam waist width of each second light beam in the second direction, and transmit each second light beam to a corresponding output port, where a transmission direction of the first light beam is opposite to a transmission direction of the second light beam.

In this implementation, a beam waist width of a light beam is changed by performing phase adjustment on the light beam by using the light beam shaping device, and is not changed by using a lens. In addition, beam waist widths of a light beam in two different dimensions can be adjusted by only using the light beam shaping device. Compared with a solution in which beam waist widths of a light beam in two different dimensions are respectively adjusted by using a plurality of lenses, the light beam shaping apparatus provided in this application has higher integrity and lower installation and adjustment difficulty.

In some possible implementations, the first light beam shaping device includes a first light beam shaping element and/or a second light beam shaping element. The first light beam shaping element one-to-one corresponds to the input port, and the second light beam shaping element one-to-one corresponds to the output port. The first light beam shaping element is configured to perform phase adjustment on the first light beam to adjust a focal length of the first light beam shaping element in the first direction and/or a focal length of the first light beam shaping element in the second direction, so as to adjust the beam waist width of the first light beam in the first direction and/or the beam waist width of the first light beam in the second direction; and/or the second light beam shaping element is configured to perform phase adjustment on the second light beam to adjust a focal length of the second light beam shaping element in the first direction and/or a focal length of the second light beam shaping element in the second direction, so as to adjust the beam waist width of the second light beam in the first direction and/or the beam waist width of the second light beam in the second direction. In this implementation, each light beam shaping element is configured to adjust a beam waist width of a light beam corresponding to the light beam shaping element, so that a beam waist width of each light beam can be independently adjusted based on actual requirements, thereby enhancing practicability of this solution.

In some possible implementations, a connection line between a center of each input port and a center of a corresponding first light beam shaping element is perpendicular to both the first direction and the second direction, and a connection line between a center of each output port and a center of a corresponding second light beam shaping element is perpendicular to both the first direction and the second direction. In other words, a position of the port precisely corresponds to a position of the light beam shaping element, to implement precise adjustment of a beam waist width of each light beam.

In some possible implementations, a distance dm between a target port in the port assembly and a corresponding target light beam shaping element in the first light beam shaping device meets a first condition, and the first condition includes:

$$\min\left(\frac{\pi\omega_0^2}{\lambda}\sqrt{\frac{\omega_x^2}{\omega_0^2} - 1}, \frac{\pi\omega_0^2}{\lambda}\sqrt{\frac{\omega_y^2}{\omega_0^2} - 1}\right) \le d_m \le \frac{\pi\omega_0^2}{\lambda}\sqrt{\left(\frac{d_f + d_b}{2\omega_0}\right)^2 - 1}$$

$d_f$ represents a distance between the target port and an adjacent port, $d_b$ represents a diameter of the target port, $\omega_0$ represents an initial beam waist width of a target light beam input into the target light beam shaping element, $\omega_x$ represents a beam waist width of the target light beam in the second direction after the target light beam passes through the target light beam shaping element, $\omega_y$ represents a beam waist width of the target light beam in the first direction after the target light beam passes through the target light beam shaping element, and $\lambda$ represents a wavelength of the target light beam.

In this implementation, an upper limit and a lower limit of $d_m$ are set based on the first condition. A purpose of setting the lower limit is to ensure that a light beam is expanded to meet a minimum light spot size required by the WSS system, and a purpose of setting the upper limit is to avoid crosstalk between ports.

In some possible implementations, a focal length $f_y$ of the target light beam shaping element in the first direction meets a second condition, and the second condition includes: $f_y \ge \frac{1}{2}d_m\left[1 + \left(\frac{\pi\omega_0^2}{\lambda d_m}\right)^2\right]$; and a focal length $f_x$ of the target light beam shaping element in the second direction meets a third condition, and the third condition includes: $f_x \ge \frac{1}{2}d_m\left[1 + \left(\frac{\pi\omega_0^2}{\lambda d_m}\right)^2\right]$. It should be understood that the second condition and the third condition are set to ensure that focal lengths of the light beam shaping element in an X direction and a Y direction are large enough, so that an incident light beam can be expanded, to meet a system requirement of the WSS.

In some possible implementations, $d_m = f_x$, and $f_x = n\pi\omega_0\omega_x/\lambda_0$; or dm = $f_y$, and $f_y = n\pi\omega_0\omega_y/\lambda_0$, where n represents a dielectric refractive index of the target light beam propagating between the target port and the target light beam shaping element, and $\lambda_0$ represents a wavelength of the target light beam in a vacuum. It should be understood that an optimal implementation effect can be achieved if the condition provided in this implementation is met.

In some possible implementations, a phase change amount $\Delta\phi(x, y)$ of the target light beam that has undergone phase adjustment at a position of coordinates (x, y) on the target light beam shaping element meets a fourth condition, and the fourth condition includes:

$$\Delta\phi(x, y) = -n\frac{2\pi}{\lambda_0}\left[\sqrt{(x - x_0)^2 + (y - y_0)^2 + f^2(x, y)} - f(x, y)\right]$$

$x_0$ represents a central coordinate of the target light beam shaping element in the second direction, $y_0$ represents a central coordinate of the target light beam shaping element in the first direction, n represents the dielectric refractive index of the target light beam propagating between the target port and the target light beam shaping element, $\lambda_0$ represents the wavelength of the target light beam in the vacuum, $f(x, y) = f_x f_y\sqrt{\frac{1}{f_y^2\cos^2\theta + f_x^2\sin^2\theta}}$, and $\theta = \arctan[\frac{y - y_0}{x - x_0}]$. It should be understood that, if the fourth condition is met, phase adjustment and control may be implemented, to achieve an objective of focus adjustment, archiving an implementation effect equivalent to an implementation effect of the lens.

In some possible implementations, when the target light beam shaping element is configured to adjust a beam waist width of the target light beam in the first direction, $d_m$ meets a fifth condition, and the fifth condition includes:

$$\frac{\pi\omega_0^2}{\lambda}\sqrt{\frac{\omega_y^2}{\omega_0^2} - 1} \le d_m \le \frac{\pi\omega_0^2}{\lambda}\sqrt{\left(\frac{d_f + d_b}{2\omega_0}\right)^2 - 1}$$.

In this case, $f_y \ge \frac{1}{2}d_m\left[1 + \left(\frac{\pi\omega_0^2}{\lambda d_m}\right)^2\right]$.

When the target light beam shaping element is configured to adjust a beam waist width of the target light beam in a second direction, $d_m$ meets a sixth condition, and the sixth condition includes:

$$\frac{\pi\omega_0^2}{\lambda}\sqrt{\frac{\omega_x^2}{\omega_0^2}-1} \leq d_m \leq \frac{\pi\omega_0^2}{\lambda}\sqrt{\left(\frac{d_f+d_b}{2\omega_0}\right)^2-1}$$

In this case, $f_x \geq \frac{1}{2}d_m\left[1+\left(\frac{\pi\omega_0^2}{\lambda d_m}\right)^2\right]$.

In some possible implementations, types of the light beam shaping element include a metasurface and a diffractive optical element (Diffractive Optical Elements, DOE), improving scalability of this solution.

In some possible implementations, the light beam shaping apparatus further includes a second light beam shaping device. The second light beam shaping device is configured to perform phase adjustment on each first light beam coming from the first light beam shaping device to adjust the beam waist width of each first light beam in the first direction and/or the beam waist width of each first light beam in the second direction, and/or, the second light beam shaping device is configured to perform phase adjustment on each input second light beam to adjust the beam waist width of each second light beam in the first direction and/or the beam waist width of each second light beam in the second direction, and transmit each second light beam to the first light beam shaping device. In this implementation, beam waist widths of a light beam in the first direction and the second direction may be respectively adjusted by using two different light beam shaping devices, thereby improving flexibility of this solution.

In some possible implementations, the light beam shaping apparatus further includes a housing, the port assembly and the first light beam shaping device are packaged in the housing, and the housing is further filled with a solid medium. In this implementation, K ports and the first light beam shaping device are bonded by using the solid medium, improving air tightness of the light beam shaping device and achieving high integrity.

In some possible implementations, the port assembly is distributed in M rows and N columns, M is an integer greater than 1, N is an integer greater than 1, M ports in each column are distributed in the first direction, and N ports in each row are distributed in the second direction. In this implementation, the port assembly is in a two-dimensional array, and is applicable to a high-dimensional multi-port WSS.

In some possible implementations, the light beam shaping apparatus further includes a polarization beam splitter. The polarization beam splitter is configured to perform polarization beam splitting on each first light beam, and transmit each first light beam that has undergone polarization beam splitting to the first light beam shaping device, or the polarization beam splitter is configured to perform polarization beam splitting on each first light beam coming from the first light beam shaping device; and each first light beam is split into a first polarization light beam and a second polarization light beam after passing through the polarization beam splitter, and the first polarization light beam and the second polarization light beam have mutually orthogonal polarization components. It should be understood that the light beam shaping apparatus provided in this implementation is applicable to a WSS based on a polarization-dependent design.

According to a second aspect, an embodiment of this application provides a WSS. The WSS includes: a dispersion assembly, a lens assembly, a light beam deflection apparatus, and the light beam shaping apparatus described in any one of the implementations of the first aspect. The dispersion assembly is configured to divide each light beam coming from the light beam shaping apparatus into a plurality of sub-wavelength light beams and transmit the plurality of sub-wavelength light beams to the lens assembly; the lens assembly is configured to transmit the plurality of sub-wavelength light beams to different areas of the light beam deflection apparatus respectively; and the light beam deflection apparatus is configured to adjust deflection directions of the plurality of sub-wavelength light beams separately.

According to a third aspect, an embodiment of this application provides a light beam shaping method. The method includes: obtaining at least one first light beam and/or at least one second light beam, where a transmission direction of the first light beam is opposite to a transmission direction of the second light beam; and performing phase adjustment on the first light beam to adjust a beam waist width of each first light beam in a first direction and/or a beam waist width of each first light beam in a second direction; and/or performing phase adjustment on the second light beam to adjust a beam waist width of each second light beam in the first direction and/or a beam waist width of each second light beam in the second direction, where the first direction is perpendicular to the second direction.

In some possible implementations, the performing phase adjustment on the first light beam includes: performing phase adjustment on the first light beam by using the first light beam shaping element to adjust a focal length of the first light beam shaping element in the first direction and/or a focal length of the first light beam shaping element in the second direction, so as to adjust the beam waist width of the first light beam in the first direction and/or the beam waist width of the first light beam in second direction. The performing phase adjustment on the second light beam includes: performing phase adjustment on the second light beam by using the second light beam shaping element to adjust a focal length of the second light beam shaping element in the first direction and/or a focal length of the second light beam shaping element in the second direction, so as to adjust the beam waist width of the second light beam in the first direction and/or the beam waist width of the second light beam in the second direction.

In some possible implementations, a connection line between a center of each input port and a center of a corresponding first light beam shaping element is perpendicular to both the first direction and the second direction, and a connection line between a center of each output port and a center of a corresponding second light beam shaping element is perpendicular to both the first direction and the second direction.

In some possible implementations, a distance $d_m$ between a target port in the port assembly and a corresponding target light beam shaping element in the first light beam shaping device meets a first condition, and the first condition includes:

$$\min\left(\frac{\pi\omega_0^2}{\lambda}\sqrt{\frac{\omega_x^2}{\omega_0^2}-1}, \frac{\pi\omega_0^2}{\lambda}\sqrt{\frac{\omega_y^2}{\omega_0^2}-1}\right) \leq d_m \leq \frac{\pi\omega_0^2}{\lambda}\sqrt{\left(\frac{d_f+d_b}{2\omega_0}\right)^2-1}$$

$d_f$ represents a distance between the target port and an adjacent port, $d_b$ represents a diameter of the target port, $\omega_0$ represents an initial beam waist width of a target light beam input into the target light beam shaping element, $\omega_x$ represents a beam waist width of the target light beam in the second direction after the target light beam passes through the target light beam shaping element, $\omega_y$ represents a beam waist width of the target light beam in the first direction after the target light beam passes through the target light beam shaping element, and $\lambda$ represents a wavelength of the target light beam.

In some possible implementations, a focal length $f_y$ of the target light beam shaping element in the first direction meets a second condition, and the second condition include: $f_y \geq \frac{1}{2}d_m\left[1+\left(\frac{\pi\omega_0^2}{\lambda d_m}\right)^2\right]$ ; and a focal length $f_x$ of the target light beam shaping element in the second direction meets a third condition, and the third condition includes:

$$f_x \geq \frac{1}{2}d_m\left[1+\left(\frac{\pi\omega_0^2}{\lambda d_m}\right)^2\right].$$

In some possible implementations, $d_m = f_x$, and $f_x = n\pi\omega_0\omega_x/\lambda_0$; or $d_m = f_y$, and $f_y = n\pi\omega_0\omega_y/\lambda_0$, where n represents a dielectric refractive index of the target light beam propagating between the target port and the target light beam shaping element, and $\lambda_0$ represents a wavelength of the target light beam in a vacuum.

In some possible implementations, a phase change amount $\Delta\phi(x, y)$ of the target light beam that has undergone phase adjustment at a position of coordinates $(x, y)$ on the target light beam shaping element meets a fourth condition, and the fourth condition includes:

$$\Delta\phi(x,y) = -n\frac{2\pi}{\lambda_0}\left[\sqrt{(x-x_0)^2+(y-y_0)^2+f^2(x,y)}-f(x,y)\right]$$

$x_0$ represents a central coordinate of the target light beam shaping element in the second direction, $y_0$ represents a central coordinate of the target light beam shaping element in the first direction, n represents the dielectric refractive index of the target light beam propagating between the target port and the target light beam shaping element, $\lambda_0$ represents the wavelength of the target light beam in the vacuum, $f(x,y) = f_x f_y \sqrt{\frac{1}{f_y^2\cos^2\theta+f_x^2\sin^2\theta}}$ , and $\theta = \arctan\left[\frac{y-y_0}{x-x_0}\right]$ .

In some possible implementations, types of the light beam shaping element include a metasurface and a DOE.

In embodiments of this application, a beam waist width of a light beam is changed by performing phase adjustment on the light beam by using the light beam shaping device, and is not changed by using a lens. In addition, beam waist widths of a light beam in two different dimensions can be adjusted by only using the light beam shaping device. Compared with a solution in which beam waist widths of a light beam in two different dimensions are respectively adjusted by using a plurality of lenses, the light beam shaping apparatus provided in this application has higher integrity and lower installation and adjustment difficulty.

## BRIEF DESCRIPTION OF DRAWINGS

FIG. 1 is a diagram of a structure of a WSS according to an embodiment of this application;

FIG. 2 is a first diagram of a structure of a light beam shaping apparatus according to an embodiment of this application;

FIG. 3(a) is a diagram of propagation of a light beam in a yoz plane;

FIG. 3(b) is a diagram of propagation of a light beam in an xoz plane;

FIG. 4 is a diagram of a structure of a metasurface according to an embodiment of this application;

FIG. 5 is a diagram of a relationship between a size of a nano column and a phase change;

FIG. 6 is a diagram of a relationship between a size of a nano column and a transmittance;

FIG. 7 is a diagram of phase distribution of a metasurface according to an embodiment of this application;

FIG. 8 is a diagram of size marking of a light beam shaping apparatus according to an embodiment of this application;

FIG. 9 is another diagram of size marking of a light beam shaping apparatus according to an embodiment of this application;

FIG. 10 is a second diagram of a structure of a light beam shaping apparatus according to an embodiment of this application; and

FIG. 11 is a diagram of an embodiment of a light beam shaping method according to an embodiment of this application.

## DESCRIPTION OF EMBODIMENTS

Embodiments of this application provide a light beam shaping apparatus, a light beam shaping method, and a WSS. In this application, a beam waist width of a light beam is changed by performing phase adjustment on the light beam by using a light beam shaping device, and is not changed by using a lens, achieving high integrity and reducing installation and adjustment difficulty. It should be noted that in this specification, claims, and accompanying drawings of this application, the terms "first", "second", and the like are intended to distinguish similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "comprise" and any other variants mean to cover the non-exclusive inclusion, so that a process, method, system, product, or device that includes a series of units is not necessarily limited to those units, but may include other units not expressly listed or inherent to such a process, method, system, product, or device.

The light beam shaping apparatus provided in embodiments of this application may be mainly used in a wavelength selective switch (Wavelength Selective Switch, WSS). To enable a light spot size to meet a system requirement of a WSS, the light beam shaping apparatus needs to perform light beam shaping on an input light beam. The following first describes the WSS.

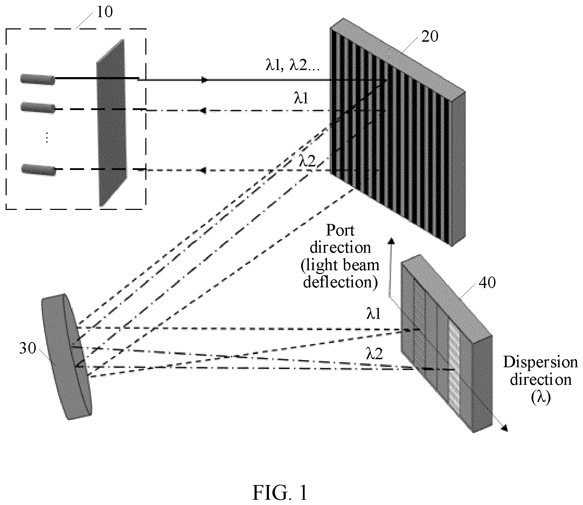

FIG. 1 is a diagram of a structure of a WSS according to an embodiment of this application. As shown in FIG. 1, the WSS includes a light beam shaping apparatus 10, a dispersion assembly 20, a lens assembly 30, and a light beam deflection apparatus 40. The light beam shaping apparatus 10 is configured to perform light beam shaping on an input wavelength multiplexed light beam. For example, the wavelength multiplexed light beam includes n wavelengths, namely, $\lambda 1, \lambda 2, ..., \lambda n$. The dispersion assembly 20 may divide the wavelength multiplexed light beam from the light beam shaping apparatus 10 into a plurality of sub-wavelength light beams along a dispersion direction shown in FIG. 1, so that the plurality of sub-wavelength light beams are separated in space. The lens assembly 30 is configured to transmit the plurality of sub-wavelength light beams to different areas of the light beam deflection apparatus 40 respectively; and the light beam deflection apparatus 40 is configured to adjust deflection directions of the plurality of sub-wavelength light beams separately. It should be understood that a deflection direction of a light beam is a port direction. In this way, a deflection direction of each sub-wavelength light beam may be adjusted to enable the sub-wavelength light beam to be transmitted to a corresponding output port. The dispersion direction is usually perpendicular to the port direction. The light beam deflection apparatus 40 may be divided into a plurality of modulation areas along the dispersion direction, to modulate the plurality of incident sub-wavelength light beams respectively.

It should be noted that an implementation form of the dispersion assembly 20 includes but is not limited to a grating, a prism, and the like. An implementation form of the lens assembly 30 includes but is not limited to a spherical lens, a cylindrical lens, and the like. In addition, the lens assembly 30 may include one or more lenses, and a specific light path may be flexibly designed based on an actual scenario. The light beam deflection apparatus 40 may specifically use a liquid crystal on silicon (Liquid Crystal on Silicon, LCOS) array. The LCOS array has a pixelized modulation area, and a deflection direction of each sub-wavelength light beam may be changed by modulating a pixel in a corresponding wavelength area. The light beam deflection apparatus 40 may alternatively be implemented by using a micro-electro-mechanical system (Micro-Electro-Mechanical System, MEMS) micromirror.

It should be understood that the WSS described above is only one application scenario of the light beam shaping apparatus provided in this application, and the light beam shaping apparatus is also applicable to another scenario in which a light beam needs to be shaped. The light beam shaping apparatus provided in this application is described in detail below.

For ease of description, in the following embodiments, a transmission direction of light is defined as a Z direction, a distribution direction of a port is defined as a Y direction, and a dispersion direction of light is defined as an X direction. The X direction is perpendicular to the Z direction, the Y direction is perpendicular to the Z direction, and the X direction is perpendicular to the Y direction.

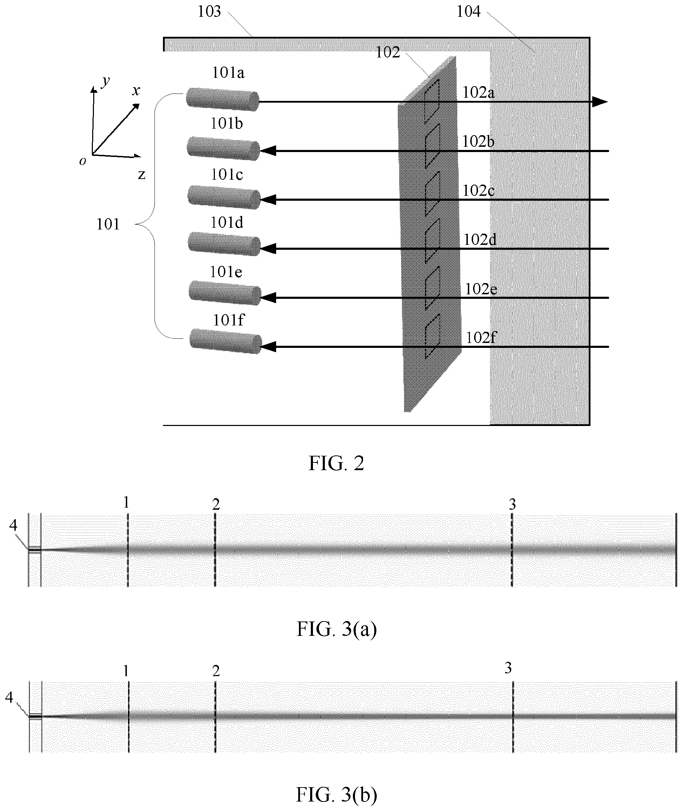

FIG. 2 is a first diagram of a structure of a light beam shaping apparatus according to an embodiment of this application. As shown in FIG. 2, the light beam shaping apparatus includes a port assembly 101 and a first light beam shaping device 102. The port assembly 101 includes an input port and/or an output port. In an example, a first light beam input from the input port is output after being processed by the first light beam shaping device 102. As another example, a second light beam processed by the first light beam shaping device 102 is output from the output port. It should be understood that transmission directions of the first light beam and the second light beam are opposite, and the first light beam shaping device 102 may separately process light beams in the opposite transmission directions. Specifically, the first light beam shaping device 102 may perform phase adjustment on the first light beam to adjust a beam waist width of the first light beam in an X direction and/or a beam waist width of the first light beam in a Y direction. The first light beam shaping device 102 may also perform phase adjustment on the second light beam to adjust a beam waist width of the second light beam in the X direction and/or a beam waist width of the second light beam in the Y direction.

In a possible implementation, the light beam shaping apparatus is an integrated apparatus. The port assembly 101 and the first light beam shaping device 102 are packaged in a housing 103. The integrated light beam shaping apparatus may also be referred to as a fiber array unit (Fiber Array Unit, FAU) in an application scenario of the WSS. Optionally, the housing 103 may be further filled with a solid medium 104, and the port assembly 101 and the first light beam shaping device 102 are bonded by using the solid medium 104, improving air tightness of the light beam shaping apparatus and achieving high integrity. The solid medium 104 usually uses a dielectric material with a high transmittance.

It should be understood that an implementation form of the port assembly 101 includes but is not limited to an optical fiber array, a waveguide array, and the like, and may be specifically a one-dimensional array, or may be a two-dimensional array. For example, if the port assembly is a two-dimensional array, the port assembly is distributed in M rows and N columns, where K=M*N. M ports in each column are distributed in the Y direction, and N ports in each column are distributed in the X direction.

It should be noted that beam waist widths of a light beam output from the light beam shaping apparatus in the X direction and the Y direction are generally determined based on a system requirement of the WSS. Based on the system requirement of the WSS, focal lengths of the first light beam shaping device 102 in the X direction and the Y direction may be determined, and then phase distribution required by the first light beam shaping device 102 may be determined. The first light beam shaping device 102 performs phase adjustment on an incident light beam based on the phase distribution, to implement a beam waist width of the required light beam.

FIG. 3(a) is a diagram of propagation of a light beam in a yoz plane. FIG. 3(b) is a diagram of propagation of a light beam in an xoz plane. As shown in FIG. 3(a) and FIG. 3(b), the port 101 is located at position 4, and the first light beam shaping device 102 is located at position 1. A light beam is input from the port 101 and passes through the first light beam shaping device 102, a waist of the light beam in the Y direction is at position 2, and a waist of the light beam in the X direction is at position 3. In view of this, in this application, beam waist widths of a Gaussian light beam in the X direction and the Y direction are independently adjusted. An application scenario of the WSS is used as an example. An elliptical light spot may be output when the first light beam input from the input port passes through the first light beam shaping device 102, and the second light beam in the direction opposite to the first light beam may be restored to a light spot with an initial size after passing through the first light beam shaping device 102 and the light spot is output from the output port.

In a possible implementation, the first light beam shaping device 102 includes a first light beam shaping element and/or a second light beam shaping element, the first light beam shaping element one-to-one corresponds to the input port, and the second light beam shaping element one-to-one corresponds to the output port. FIG. 2 is used as an example. The port assembly includes an input port 101a, an output port 101b, ..., and an output port 101f, and the first light beam shaping device includes a first light beam shaping element 102a, a second light beam shaping element 102b, ..., and a second light beam shaping element 102f. Specifically, the first light beam shaping element is configured to perform phase adjustment on the first light beam to adjust a focal length of the first light beam shaping element in the X direction and/or a focal length of the first light beam shaping element in the Y direction, so as to adjust the beam waist width of the first light beam in the X direction and/or the beam waist width of the first light beam in the Y direction. The second light beam shaping element is configured to perform phase adjustment on the second light beam to adjust a focal length of the second light beam shaping element in the X direction and/or a focal length of the second light beam shaping element in the Y direction, so as to adjust the beam waist width of the second light beam in the X direction and/or the beam waist width of the second light beam in the Y direction. Preferably, a connection line between a center of each port and a center of a corresponding light beam shaping element is parallel to the Z direction. In other words, a position of the port precisely corresponds to a position of the light beam shaping element, to implement precise adjustment of a beam waist width of each light beam.

It should be noted that the light beam shaping element includes a plurality of phase adjustment units, and the plurality of phase adjustment units are arranged in an array. Specifically, types of the light beam shaping element include, but are not limited to, a metasurface and a diffractive optical element (Diffractive Optical Element, DOE). The following uses the metasurface and the DOE as examples for description.

Implementation 1: The light beam shaping element is a metasurface.

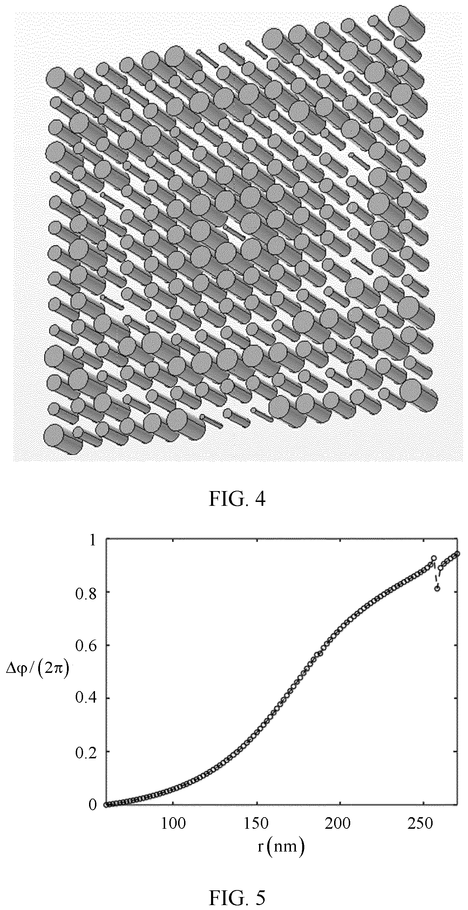

FIG. 4 is a diagram of a structure of a metasurface according to an embodiment of this application. As shown in FIG. 4, the metasurface is formed by a micro structure array. For example, the micro structure may be a nano column, a material of the micro structure may be silicon, and each micro structure may be considered as an independent phase adjustment unit. A cross-section shape of the nano column includes but is not limited to a rectangle, a circle, an ellipse, and a cross. In a possible implementation, both a feature size of the nano column and a distance between two adjacent nano columns are less than a wavelength of an incident light beam, to achieve a better implementation effect. For example, the nano column is a cylinder, and the feature size of the nano column includes a height of the nano column and a diameter of a cross section. For another example, the nano column is a square column, and the feature size of the nano column includes a height of the nano column and a side length of a cross section. In another possible implementation, the nano column array may be embedded in a medium, and the nano column array may be disposed on an optical substrate as required. An upper surface of the optical substrate includes but is not limited to a plane and a sphere.

It should be understood that, as shown in FIG. 4, the micro structure array of the metasurface may include micro structures of different sizes. How the micro structures on the micro structure array are specifically distributed determines phase distribution of the metasurface, and further determines a beam waist width of a light beam that has undergone phase adjustment performed by the metasurface. In other words, a size of a micro structure disposed at each position on the metasurface may be determined based on a beam waist width of an actually required light beam, to flexibly design a distribution form of the micro structure array.

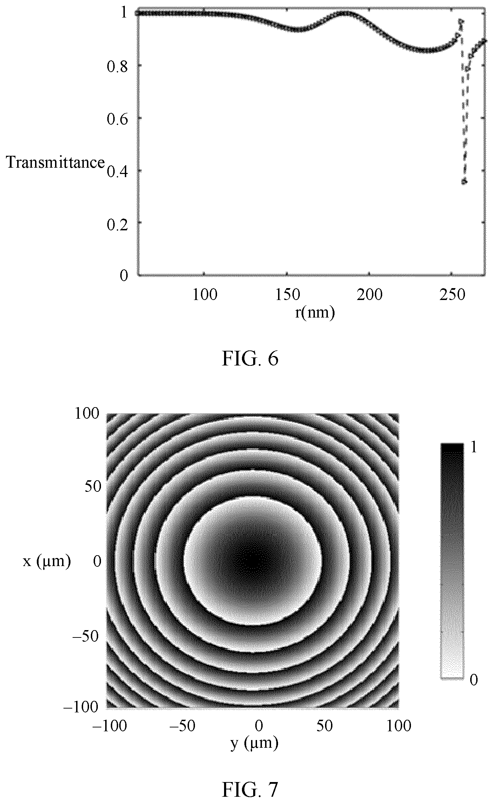

FIG. 5 is a diagram of a relationship between a size of a nano column and a phase change. As shown in FIG. 5, an example in which the nano column is a cylinder, a wavelength of an incident light beam is: $\lambda_0 = 1550$ nm, and a background medium base is silicon dioxide is used. A horizontal coordinate represents a cross-sectional radius r (unit: nm) of the nano column, and a vertical coordinate represents a phase change $\Delta\phi$ (unit: $2\pi$) of the light beam after the light beam passes through the nano column. FIG. 6 is a diagram of a relationship between a size of a nano column and a transmittance. As shown in FIG. 6, an example in which the nano column is a cylinder and a wavelength of an incident light beam is: $\lambda_0 = 1550$ nm is used. A horizontal coordinate represents a cross-sectional radius r (unit: nm) of the nano column, and a vertical coordinate represents a transmittance of the light beam after the light beam passes through the nano column. A phase surface is discretized, to implement phase distribution required by the metasurface by placing a designated nano column in a corresponding position.

FIG. 7 is a diagram of phase distribution of a metasurface according to an embodiment of this application. Based on the metasurface phase distribution shown in FIG. 6, a light beam whose $\omega_x = 24$ $\mu$m and $\omega_y = 50$ $\mu$m may be output, where $\omega_x$ represents a beam waist width of the light beam in the X direction, and $\omega_y$ represents a beam waist width of the light beam in the Y direction.

Implementation 2: The light beam shaping element is a DOE.

The DOE is an etched structure with different depths on a surface of an optical substrate. In other words, a surface height of the DOE may be uneven, and no accompanying drawing is provided herein. Each position having an independent height on the surface of the DOE may be considered as an independent phase adjustment unit. A material of the optical substrate of the DOE includes but is not limited to quartz glass, common glass, and silicon. It should be understood that how heights of positions on the surface of the DOE are distributed determines phase distribution of the DOE, and further determines a beam waist width of a light beam that has undergone phase adjustment performed by the DOE. In other words, a height of each position on the surface of the DOE may be determined based on a beam waist width of an actually required light beam, to flexibly design a distribution form of the surface height of the DOE.

It should be noted that, to achieve a better implementation effect, the light beam shaping element also needs to meet some conditions. The conditions are separately described below.

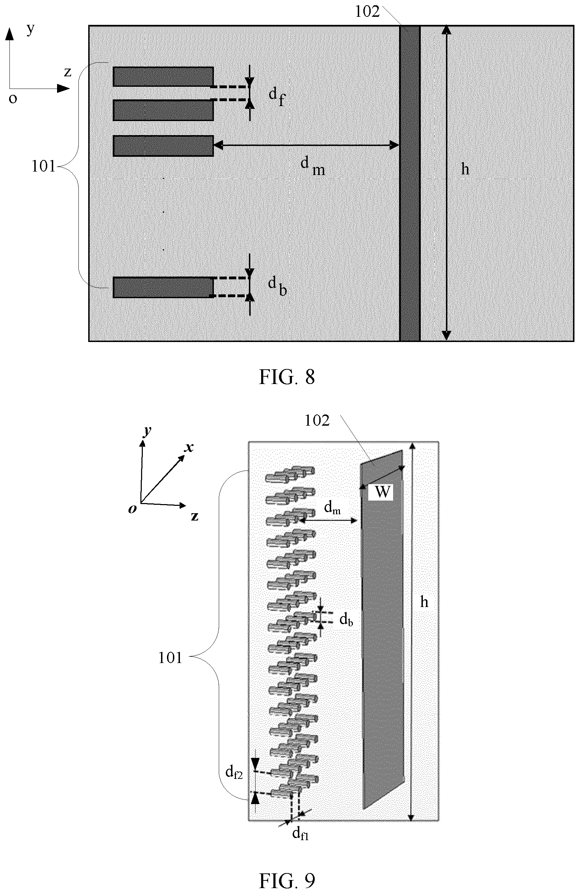

FIG. 8 is a diagram of size marking of a light beam shaping apparatus according to an embodiment of this application. As shown in FIG. 8, $d_m$ represents a distance between a port and a corresponding light beam shaping element, $d_f$ represents a distance between two adjacent ports, $d_b$ represents a diameter of the port, and h represents a height of a first light beam shaping device in a Y direction. It should be understood that h is determined by a quantity K of ports, $d_f$, and $d_b$, where $h \geq K * (d_f + d_b)$.

In a possible implementation, $d_m$ meets a first condition, and the first condition includes:

$$\min\left(\frac{\pi\omega_0^2}{\lambda}\sqrt{\frac{\omega_x^2}{\omega_0^2}-1}, \frac{\pi\omega_0^2}{\lambda}\sqrt{\frac{\omega_y^2}{\omega_0^2}-1}\right) \le d_m \le \frac{\pi\omega_0^2}{\lambda}\sqrt{\left(\frac{d_f+d_b}{2\omega_0}\right)^2-1}$$

$\omega_0$ represents an initial beam waist width of a light beam input into the light beam shaping element, $\omega_x$ represents a beam waist width of the light beam in an X direction after the light beam passes through a corresponding light beam shaping element, $\omega_y$ represents a beam waist width of the light beam in a Y direction after the light beam passes through a corresponding light beam shaping element, and $\lambda$ represents a wavelength of the light beam. It should be understood that, an upper limit and a lower limit of $d_m$ are set based on the foregoing first condition. A purpose of setting the lower limit is to ensure that a light beam is expanded to meet a minimum light spot size required by the WSS system, and a purpose of setting the upper limit is to avoid crosstalk between ports.

In a possible implementation, a focal length $f_y$ of the light beam shaping element in the Y direction meets a second condition, and the second condition include: $f_y \ge \frac{1}{2}d_m\left[1 + \left(\frac{\pi\omega_0^2}{\lambda d_m}\right)^2\right]$; and a focal length $f_x$ of the light beam shaping element in the X direction meets a third condition, and the third condition includes: $f_x \ge \frac{1}{2}d_m\left[1 + \left(\frac{\pi\omega_0^2}{\lambda d_m}\right)^2\right]$. It should be understood that the second condition and the third condition are set to ensure that focal lengths of the light beam shaping element in the X direction and the Y direction are large enough, so that an incident light beam can be expanded, to meet a system requirement of the WSS.

In a possible implementation, $d_m = f_x$, and $f_x = n\pi\omega_0\omega_x/\lambda_0$; or $d_m = f_y$, and $f_y = n\pi\omega_0\omega_y/\lambda_0$. Here, n represents a dielectric refractive index of the light beam propagating between the port and the light beam shaping element, and $\lambda_0$ represents a wavelength of the light beam in a vacuum. It should be understood that an optimal implementation effect can be achieved if the condition provided in this implementation is met.

In a possible implementation, a phase change amount $\Delta\phi(x,y)$ of the light beam that has undergone phase adjustment at a position of coordinates (x, y) on the light beam shaping element meets a fourth condition, and the fourth condition includes:

$$\Delta\phi(x,y) = -n\frac{2\pi}{\lambda_0}\left[\sqrt{x^2+y^2+f^2(x,y)} - f(x,y)\right]$$

$x_0$ represents a central coordinate of the light beam shaping element in the X direction, $y_0$ represents a central coordinate of the light beam shaping element in the Y direction, n represents the dielectric refractive index of the light beam propagating between the port and the light beam shaping element, $\lambda_0$ represents the wavelength of the light beam in the

vacuum, $f(x,y) = f_x f_y \sqrt{\frac{1}{f_y^2\cos^2\theta + f_x^2\sin^2\theta}}$, and $\theta = \arctan\left[\frac{y-y_0}{x-x_0}\right]$. It should be understood that, if the fourth condition is met, phase adjustment and control may be implemented, to achieve an objective of focus adjustment, archiving an implementation effect equivalent to an implementation effect of the lens.

In a possible implementation, $\Delta\phi(x, y = 0) = -n\frac{2\pi}{\lambda_0}\left[\sqrt{x^2+f_x^2} - f_x\right]$ and $\Delta\phi(y, x = 0) = -n\frac{2\pi}{\lambda_0}\left[\sqrt{y^2+f_y^2} - f_y\right]$.

In a possible implementation, a specified condition also needs to be met when the light beam shaping element independently adjusts a beam waist width of the light beam in one of the directions. For example, when a target light beam shaping element is configured to adjust a beam waist width of a target light beam in a first direction, $d_m$ meets a fifth condition, and the fifth condition includes:

$$\frac{\pi\omega_0^2}{\lambda}\sqrt{\frac{\omega_y^2}{\omega_0^2}-1} \le d_m \le \frac{\pi\omega_0^2}{\lambda}\sqrt{\left(\frac{d_f+d_b}{2\omega_0}\right)^2-1}$$

In this case, $f_y \ge \frac{1}{2}d_m\left[1 + \left(\frac{\pi\omega_0^2}{\lambda d_m}\right)^2\right]$.

For another example, when the target light beam shaping element is configured to adjust a beam waist width of the target light beam in a second direction, $d_m$ meets a sixth condition, and the sixth condition includes:

$$\frac{\pi\omega_0^2}{\lambda}\sqrt{\frac{\omega_x^2}{\omega_0^2}-1} \le d_m \le \frac{\pi\omega_0^2}{\lambda}\sqrt{\left(\frac{d_f+d_b}{2\omega_0}\right)^2-1}.$$

In this case, $f_x \ge \frac{1}{2}d_m\left[1+\left(\frac{\pi\omega_0^2}{\lambda d_m}\right)^2\right]$.

FIG. 9 is another diagram of size marking of a light beam shaping apparatus according to an embodiment of this application. As shown in FIG. 9, ports 101 are distributed in a two-dimensional array, including M rows and N columns. M ports in each column are distributed in a Y direction, and N ports in each column are distributed in an X direction. $d_m$ represents a distance between a port and a corresponding light beam shaping element, $d_b$ represents a diameter of the port, $d_{f1}$ represents a distance between two adjacent ports in the X direction, $d_{f2}$ represents a distance between two adjacent ports in the Y direction, h represents a height of a first light beam shaping device in the Y direction, and W represents a width of the first light beam shaping device in the X direction. $W \ge N * (d_{f1} + d_b)$, $h \ge M * (d_{f2} + d_b)$.

In a possible implementation, $d_m$ meets a seventh condition, and the seventh condition includes:

$$\min\left(\frac{\pi\omega_0^2}{\lambda}\sqrt{\frac{\omega_x^2}{\omega_0^2}-1}, \frac{\pi\omega_0^2}{\lambda}\sqrt{\frac{\omega_y^2}{\omega_0^2}-1}\right) \le d_m \le \min\left(\frac{\pi\omega_0^2}{\lambda}\sqrt{\left(\frac{d_{f1}+d_b}{2\omega_0}\right)^2-1}, \frac{\pi\omega_0^2}{\lambda}\sqrt{\left(\frac{d_{f2}+d_b}{2\omega_0}\right)^2-1}\right)$$

$\omega_0$ represents a beam waist width of a light beam input from the port, $\omega_x$ represents a beam waist width of the light beam in the X direction after the light beam passes through a corresponding light beam shaping element, $\omega_y$ represents a beam waist width of the light beam in the Y direction after the light beam passes through a corresponding light beam shaping element, and $\lambda$ represents a wavelength of the light beam.

It should be noted that, in the foregoing embodiment, one light beam shaping device is used to adjust the beam waist widths of the light beam in the X direction and the Y direction. In an actual application, two different light beam shaping devices may alternatively be used to adjust the beam waist widths of the light beam in the X direction and the Y direction. Descriptions are as follows.

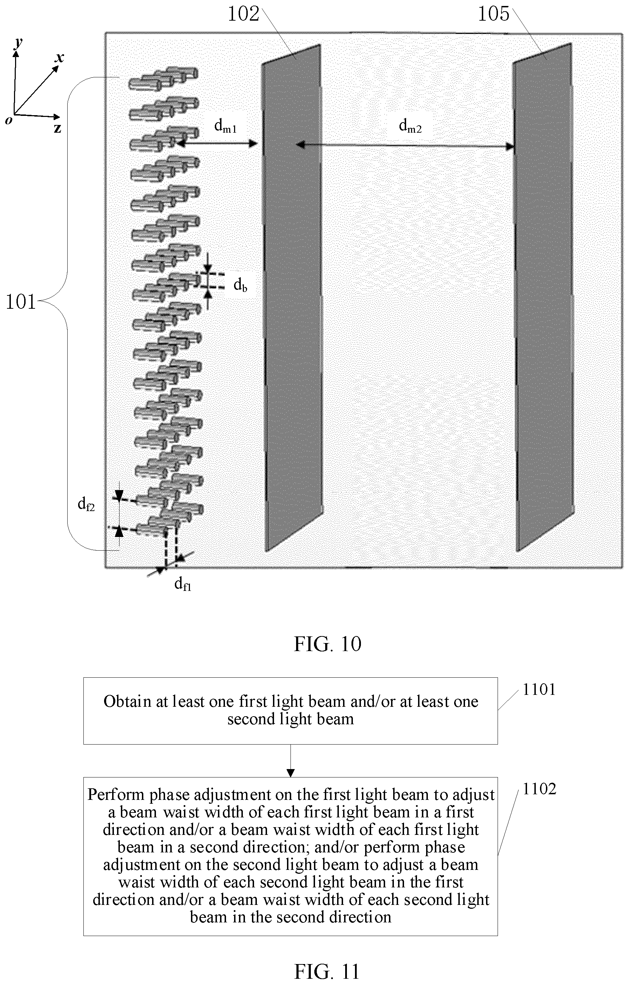

FIG. 10 is a second diagram of a structure of a light beam shaping apparatus according to an embodiment of this application. Different from the light beam shaping apparatus shown in FIG. 2, the light beam shaping apparatus shown in FIG. 10 includes a first light beam shaping device 102 and a second light beam shaping device 105. For example, the first light beam shaping device 102 is configured to adjust a beam waist width of a light beam in a Y direction, and the second light beam shaping device 105 is configured to adjust a beam waist width of the light beam in an X direction. For another example, the first light beam shaping device 102 is configured to adjust a beam waist width of a light beam in an X direction, and the second light beam shaping device 105 is configured to adjust a beam waist width of the light beam in a Y direction. It should be understood that, in an actual application, the first light beam shaping device 102 may choose to adjust the beam waist width of the light beam in one of the directions based on actual requirements, or adjust the beam waist widths of the light beam in the two directions at the same time. Similarly, this is also applicable to the second light beam shaping device 105.

In a possible implementation, phase distribution of the first light beam shaping device 102 meets: $\Delta\phi_1 = -n\frac{2\pi}{\lambda_0}(\sqrt{(x^2+y^2)+f_1^2}-f_1)$, where $f_1 = n\pi\omega_0\omega_x/\lambda_0$. Phase distribution of the second light beam shaping device 105 meets: $\Delta\phi_2(x,y) = n\frac{2\pi}{\lambda_0}(\sqrt{y^2+f_2^2}-f_2)$, where $f_2 = n\pi\omega_0\omega_y/\lambda_0$. Optionally, a distance between the first light beam shaping device 102 and the port 101 is: $d_{m1} = f_1$, and a distance between the first light beam shaping device 102 and the second light beam shaping device 105 is: $d_{m2} = f_1 + f_2$.

It should be noted that, in some possible implementations, the WSS is designed based on polarization-dependent design, and the light beam shaping apparatus may further include a polarization beam splitter. Specifically, the polarization beam splitter is configured to perform polarization splitting on an input light beam. The light beam is split into a first polarization light beam and a second polarization light beam after passing through the polarization beam splitter, and the first polarization light beam and the second polarization light beam have mutually orthogonal polarization components. It should be understood that polarization splitting may be performed before light beam shaping, or may be performed after light beam shaping. This is not specifically limited herein.

Based on the foregoing descriptions, in this application, a beam waist width of a light beam is changed by performing phase adjustment on the light beam by using the light beam shaping device, and is not changed by using a lens. In addition, beam waist widths of a light beam in two different dimensions can be adjusted by only using the light beam shaping device. Compared with a solution in which beam waist widths of a light beam in two different dimensions are respectively adjusted by using a plurality of lenses, the light beam shaping apparatus provided in this application has higher integrity and lower installation and adjustment difficulty.

The light beam shaping apparatus provided in embodiments of this application is described above, and the light beam shaping method provided in embodiments of this application is described below.

FIG. 11 is a diagram of an embodiment of a light beam shaping method according to an embodiment of this application. It should be noted that the light beam shaping method is implemented based on the light beam shaping apparatus described above. For the structure of the light beam shaping apparatus, reference may be made to related descriptions of the foregoing embodiments, and details are not described herein again. In this example, the light beam shaping method includes the following steps.

1101. Obtain at least one first light beam and/or at least one second light beam.

It should be noted that a transmission direction of the first light beam is opposite to a transmission direction of the second light beam. The embodiment shown in FIG. 2 is used as an example. The first light beam comes from an input port in a port assembly and is transmitted to a first light beam shaping device, and the second light beam is transmitted to an output port in the port assembly after passing through the first light beam shaping device. An implementation form of the port assembly includes but is not limited to an optical fiber array, a waveguide array, and the like, and may be specifically a one-dimensional array, or may be a two-dimensional array.

1102. Perform phase adjustment on the first light beam to adjust a beam waist width of each first light beam in a first direction and/or a beam waist width of each first light beam in a second direction; and/or perform phase adjustment on the second light beam to adjust a beam waist width of each second light beam in the first direction and/or a beam waist width of each second light beam in the second direction.

It should be understood that the first direction is perpendicular to the second direction. In some possible implementations, specifically, a light beam shaping element may be used to perform phase adjustment on a light beam to adjust a focal length of the light beam shaping element in an X direction and/or a focal length of the light beam shaping element in a Y direction, so as to adjust a beam waist width of the light beam in the X direction and/or a beam waist width of the light beam in the Y direction. For example, the first light beam shaping element performs phase adjustment on the first light beam, and the second light beam shaping element performs phase adjustment on the second light beam. For a specific implementation of the light beam shaping element, refer to related descriptions of the foregoing embodiment, and details are not described herein again.

It should be noted that the foregoing embodiments are only used to describe the technical solutions of this application, but not to limit the technical solutions. Although this application is described in detail with reference to the foregoing embodiments, a person of ordinary skilled in the art should understand that modifications may still be made to the technical solutions described in the foregoing embodiments or equivalent replacements may be made to some technical features, and such modifications or replacements do not cause the essence of the corresponding technical solutions to depart from the scope of embodiments of this application.

**Claims**

1. A light beam shaping apparatus, comprising a port assembly and a first light beam shaping device, wherein the port assembly comprises an input port and/or an output port;

   the first light beam shaping device is configured to perform phase adjustment on each input first light beam to adjust a beam waist width of each first light beam in a first direction and/or a beam waist width of each first light beam in a second direction, wherein the first direction is perpendicular to the second direction, and each first light beam comes from a corresponding input port; and/or
   the first light beam shaping device is configured to perform phase adjustment on each input second light beam to adjust a beam waist width of each second light beam in the first direction and/or a beam waist width of each second light beam in the second direction, and transmit each second light beam to a corresponding output port, wherein a transmission direction of the first light beam is opposite to a transmission direction of the second light beam.

2. The light beam shaping apparatus according to claim **1,** wherein the first light beam shaping device comprises a first light beam shaping element and/or a second light beam shaping element, the first light beam shaping element one-to-one corresponds to the input port, and the second light beam shaping element one-to-one corresponds to the output port;

   the first light beam shaping element is configured to perform phase adjustment on the first light beam to adjust a focal length of the first light beam shaping element in the first direction and/or a focal length of the first light beam shaping element in the second direction, so as to adjust the beam waist width of the first light beam in the first direction and/or the beam waist width of the first light beam in the second direction; and/or
the second light beam shaping element is configured to perform phase adjustment on the second light beam to adjust a focal length of the second light beam shaping element in the first direction and/or a focal length of the second light beam shaping element in the second direction, so as to adjust the beam waist width of the second light beam in the first direction and/or the beam waist width of the second light beam in the second direction.

3. The light beam shaping apparatus according to claim 2, wherein a connection line between a center of each input port and a center of a corresponding first light beam shaping element is perpendicular to both the first direction and the second direction, and a connection line between a center of each output port and a center of a corresponding second light beam shaping element is perpendicular to both the first direction and the second direction.

4. The light beam shaping apparatus according to claim 3, wherein a distance $d_m$ between a target port in the port assembly and a corresponding target light beam shaping element in the first light beam shaping device meets a first condition, and the first condition comprises:

$$\min\left(\frac{\pi\omega_0^2}{\lambda}\sqrt{\frac{\omega_x^2}{\omega_0^2}-1}, \frac{\pi\omega_0^2}{\lambda}\sqrt{\frac{\omega_y^2}{\omega_0^2}-1}\right) \le d_m \le \frac{\pi\omega_0^2}{\lambda}\sqrt{\left(\frac{d_f+d_b}{2\omega_0}\right)^2-1},$$

wherein
$d_f$ represents a distance between the target port and an adjacent port, $d_b$ represents a diameter of the target port, $\omega_0$ represents an initial beam waist width of a target light beam input into the target light beam shaping element, $\omega_x$ represents a beam waist width of the target light beam in the second direction after the target light beam passes through the target light beam shaping element, $\omega_y$ represents a beam waist width of the target light beam in the first direction after the target light beam passes through the target light beam shaping element, and $\lambda$ represents a wavelength of the target light beam.

5. The light beam shaping apparatus according to claim 4, wherein a focal length $f_y$ of the target light beam shaping element in the first direction meets a second condition, and the second condition comprises: $f_y \ge \frac{1}{2}d_m\left[1+\left(\frac{\pi\omega_0^2}{\lambda d_m}\right)^2\right]$; and
a focal length $f_x$ of the target light beam shaping element in the second direction meets a third condition, and the third condition comprises: $f_x \ge \frac{1}{2}d_m\left[1+\left(\frac{\pi\omega_0^2}{\lambda d_m}\right)^2\right]$.

6. The light beam shaping apparatus according to claim 5, wherein $d_m = f_x$, and $f_x = n\pi\omega_0\omega_x/\lambda_0$; or $d_m = f_y$, and $f_y = n\pi\omega_0\omega_y/\lambda_0$, wherein n represents a dielectric refractive index of the target light beam propagating between the target port and the target light beam shaping element, and $\lambda_0$ represents a wavelength of the target light beam in a vacuum.

7. The light beam shaping apparatus according to claim 5 or 6, wherein a phase change amount $\Delta\phi(x, y)$ of the target light beam that has undergone phase adjustment at a position of coordinates (x, y) on the target light beam shaping element meets a fourth condition, and the fourth condition comprises:

$$\Delta\phi(x,y) = -n\frac{2\pi}{\lambda_0}\left[\sqrt{(x-x_0)^2+(y-y_0)^2+f^2(x,y)}-f(x,y)\right],$$

wherein
$x_0$ represents a central coordinate of the target light beam shaping element in the second direction, $y_0$ represents a central coordinate of the target light beam shaping element in the first direction, n represents the dielectric refractive index of the target light beam propagating between the target port and the target light beam shaping element, $\lambda_0$ represents the wavelength of the target light beam in the vacuum, $f(x,y) = f_x f_y \sqrt{\frac{1}{f_y^2\cos^2\theta+f_x^2\sin^2\theta}}$, and $\theta = \arctan\left[\frac{y-y_0}{x-x_0}\right]$.

8. The light beam shaping apparatus according to any one of claims 2 to 7, wherein types of the light beam shaping elements comprise a metasurface and a diffractive optical element DOE.

9. The light beam shaping apparatus according to any one of claims 1 to 8, wherein the light beam shaping apparatus further comprises a second light beam shaping device;

the second light beam shaping device is configured to perform phase adjustment on each first light beam coming from the first light beam shaping device to adjust the beam waist width of each first light beam in the first direction and/or the beam waist width of each first light beam in the second direction, and/or the second light beam shaping device is configured to perform phase adjustment on each input second light beam to adjust the beam waist width of each second light beam in the first direction and/or the beam waist width of each second light beam in the second direction, and transmit each second light beam to the first light beam shaping device.

10. The light beam shaping apparatus according to any one of claims 1 to 9, wherein the light beam shaping apparatus further comprises a housing, the port assembly and the first light beam shaping device are packaged in the housing, and the housing is further filled with a solid medium.

11. The light beam shaping apparatus according to any one of claims 1 to 10, wherein ports in the port assembly are distributed in M rows and N columns, M is an integer greater than 1, N is an integer greater than 1, M ports in each column are distributed in the first direction, and N ports in each row are distributed in the second direction.

12. The light beam shaping apparatus according to any one of claims 1 to 11, wherein the light beam shaping apparatus further comprises a polarization beam splitter;

the polarization beam splitter is configured to perform polarization beam splitting on each first light beam, and transmit each first light beam that has undergone polarization beam splitting to the first light beam shaping device, or the polarization beam splitter is configured to perform polarization beam splitting on each first light beam coming from the first light beam shaping device; and each first light beam is split into a first polarization light beam and a second polarization light beam after passing through the polarization beam splitter, and the first polarization light beam and the second polarization light beam have mutually orthogonal polarization components.

13. A wavelength selective switch WSS, comprising: a dispersion assembly, a lens assembly, a light beam deflection apparatus, and the light beam shaping apparatus according to any one of claims 1 to 12, wherein

the dispersion assembly is configured to divide each light beam coming from the light beam shaping apparatus into a plurality of sub-wavelength light beams and transmit the plurality of sub-wavelength light beams to the lens assembly; the lens assembly is configured to transmit the plurality of sub-wavelength light beams to different areas of the light beam deflection apparatus respectively; and the light beam deflection apparatus is configured to adjust deflection directions of the plurality of sub-wavelength light beams separately.

14. A light beam shaping method, comprising:

obtaining at least one first light beam and/or at least one second light beam, wherein a transmission direction of the first light beam is opposite to a transmission direction of the second light beam; and performing phase adjustment on the first light beam to adjust a beam waist width of each first light beam in a first direction and/or a beam waist width of each first light beam in a second direction; and/or performing phase adjustment on the second light beam to adjust a beam waist width of each second light beam in the first direction and/or a beam waist width of each second light beam in the second direction, wherein the first direction is perpendicular to the second direction.

15. The method according to claim 14, wherein the performing phase adjustment on the first light beam comprises:

performing phase adjustment on the first light beam by using the first light beam shaping element to adjust a focal length of the first light beam shaping element in the first direction and/or a focal length of the first light beam shaping element in the second direction, so as to adjust the beam waist width of the first light beam in the first direction and/or the beam waist width of the first light beam in the second direction; and

the performing phase adjustment on the second light beam comprises:

performing phase adjustment on the second light beam by using the second light beam shaping element to adjust a focal length of the second light beam shaping element in the first direction and/or a focal length of the second light beam shaping element in the second direction, so as to adjust the beam waist width of the second light beam in the first direction and/or the beam waist width of the second light beam in the second direction.

16. The method to claim 15, wherein a connection line between a center of each input port and a center of a corresponding first light beam shaping element is perpendicular to both the first direction and the second direction, and a connection line between a center of each output port and a center of a corresponding second light beam shaping element is perpendicular to both the first direction and the second direction.

17. The method according to claim 16, wherein a distance $d_m$ between a target port in the port assembly and a corresponding target light beam shaping element in the first light beam shaping device meets a first condition, and the first condition comprises:

$$\min\left(\frac{\pi\omega_0^2}{\lambda}\sqrt{\frac{\omega_x^2}{\omega_0^2}-1},\frac{\pi\omega_0^2}{\lambda}\sqrt{\frac{\omega_y^2}{\omega_0^2}-1}\right) \leq d_m \leq \frac{\pi\omega_0^2}{\lambda}\sqrt{\left(\frac{d_f+d_b}{2\omega_0}\right)^2-1},$$

wherein

$d_f$ represents a distance between the target port and an adjacent port, $d_b$ represents a diameter of the target port, $\omega_0$ represents an initial beam waist width of a target light beam input into the target light beam shaping element, $\omega_x$ represents a beam waist width of the target light beam in the second direction after the target light beam passes through the target light beam shaping element, $\omega_y$ represents a beam waist width of the target light beam in the first direction after the target light beam passes through the target light beam shaping element, and $\lambda$ represents a wavelength of the target light beam.

18. The method according to claim 17, wherein a focal length $f_y$ of the target light beam shaping element in the first direction meets a second condition, and the second condition comprises: $f_y \geq \frac{1}{2}d_m\left[1+\left(\frac{\pi\omega_0^2}{\lambda d_m}\right)^2\right]$ ; and a focal length $f_x$ of the target light beam shaping element in the second direction meets a third condition, and the third condition comprises: $f_x \geq \frac{1}{2}d_m\left[1+\left(\frac{\pi\omega_0^2}{\lambda d_m}\right)^2\right]$ .

19. The method according to claim 18, wherein $d_m = f_x$, and $f_x = n\pi\omega_0\omega_x/\lambda_0$; or $d_m = f_y$, and $f_y = n\pi\omega_0\omega_y/_0$, wherein n represents a dielectric refractive index of the target light beam propagating between the target port and the target light beam shaping element, and $\lambda_0$ represents a wavelength of the target light beam in a vacuum.

20. The method according to claim 18 or 19, wherein a phase change amount $\Delta\phi(x, y)$ of the target light beam that has undergone phase adjustment at a position of coordinates (x, y) on the target light beam shaping element meets a fourth condition, and the fourth condition comprises:

$$\Delta\phi(x,y) = -n\frac{2\pi}{\lambda_0}\left[\sqrt{(x-x_0)^2+(y-y_0)^2+f^2(x,y)} - f(x,y)\right],$$

wherein

$x_0$ represents a central coordinate of the target light beam shaping element in the second direction, $y_0$ represents a central coordinate of the target light beam shaping element in the first direction, n represents the dielectric refractive index of the target light beam propagating between the target port and the target light beam shaping element, $\lambda_0$ represents the wavelength of the target light beam in the vacuum, $f(x,y) = f_x f_y\sqrt{\frac{1}{f_y^2\cos^2\theta+f_x^2\sin^2\theta}}$ , and $\theta = \arctan[\frac{y-y_0}{x-x_0}]$ .

21. The method according to any one of claims 15 to 20, wherein types of the light beam shaping elements comprise a metasurface and a diffractive optical element DOE.

λ1, λ2...

λ1

λ2

10

20

Port
direction
(light beam
deflection)

λ1

λ2

40

30

Dispersion
direction
(λ)

FIG. 1

FIG. 2

FIG. 3(a)

FIG. 3(b)

FIG. 4

FIG. 5

FIG. 6

FIG. 7

FIG. 8

FIG. 9

FIG. 10

Obtain at least one first light beam and/or at least one second light beam    1101

Perform phase adjustment on the first light beam to adjust a beam waist width of each first light beam in a first direction and/or a beam waist width of each first light beam in a second direction; and/or perform phase adjustment on the second light beam to adjust a beam waist width of each second light beam in the first direction and/or a beam waist width of each second light beam in the second direction    1102

FIG. 11

## INTERNATIONAL SEARCH REPORT

| International application No. |
|---|
| **PCT/CN2023/097770** |

| A. | CLASSIFICATION OF SUBJECT MATTER |
|---|---|
| | G02B27/09(2006.01)i;　G02B6/293(2006.01)i |

According to International Patent Classification (IPC) or to both national classification and IPC

| B. | FIELDS SEARCHED |
|---|---|

Minimum documentation searched (classification system followed by classification symbols)

　　　IPC：　G02B27 G02B6

Documentation searched other than minimum documentation to the extent that such documents are included in the fields searched

Electronic data base consulted during the international search (name of data base and, where practicable, search terms used)

　　　CNTXT, ENTXTC, VEN, CNKI, 超星读秀, DUXIU: 波长选择, 整形, 束腰, 束宽, 宽度, 串扰, 干扰, 光纤阵列, 波导阵列, 阵列光纤, 阵列波导, 阵列, 超表面, 超颖表面, 超构, 纳米柱, 衍射光学元件, 端口, 输入端口, 输出端口, 焦距, 相位, DOE, FAU, port, Shaping, waist, array, wss, wavelength selective switch

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 106054319 A (BENNETT OPTICAL TECHNOLOGY (KUNSHAN) CO., LTD.) 26 October 2016 (2016-10-26) <br> description, paragraphs 19-34, and figures 2-4 | 1-3, 8-16, 21 |
| A | CN 102608710 A (WUHAN RESEARCH INSTITUTE OF POST AND TELECOMMUNICATION) 25 July 2012 (2012-07-25) <br> entire document | 1-21 |
| A | CN 107991771 A (BEIJING INSTITUTE OF TECHNOLOGY) 04 May 2018 (2018-05-04) <br> entire document | 1-21 |
| A | CN 109375317 A (ACCELINK TECHNOLOGIES CO., LTD.) 22 February 2019 (2019-02-22) <br> entire document | 1-21 |
| A | CN 114488407 A (SHENZHEN UNIVERSITY) 13 May 2022 (2022-05-13) <br> entire document | 1-21 |
| A | US 2014023316 A1 (MCLAUGHLIN SHELDON) 23 January 2014 (2014-01-23) <br> entire document | 1-21 |

☑ Further documents are listed in the continuation of Box C. 　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 August 2023** | **02 September 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/097770**

**C. DOCUMENTS CONSIDERED TO BE RELEVANT**

| Category* | Citation of document, with indication, where appropriate, of the relevant passages | Relevant to claim No. |
|---|---|---|
| A | US 2015277056 A1 (JDS UNIPHASE CORP.) 01 October 2015 (2015-10-01)<br>entire document | 1-21 |

**INTERNATIONAL SEARCH REPORT**
Information on patent family members

International application No.

**PCT/CN2023/097770**

| Patent document cited in search report | | | Publication date (day/month/year) | Patent family member(s) | | | Publication date (day/month/year) |
|---|---|---|---|---|---|---|---|
| CN | 106054319 | A | 26 October 2016 | CN | 106054319 | B | 18 June 2019 |
| CN | 102608710 | A | 25 July 2012 | CN | 102608710 | B | 04 June 2014 |
| CN | 107991771 | A | 04 May 2018 | CN | 107991771 | B | 11 October 2019 |
| CN | 109375317 | A | 22 February 2019 | None | | | |
| CN | 114488407 | A | 13 May 2022 | None | | | |
| US | 2014023316 | A1 | 23 January 2014 | US | 8977079 | B2 | 10 March 2015 |
| US | 2015277056 | A1 | 01 October 2015 | US | 9488787 | B2 | 08 November 2016 |
| | | | | US | 2017123161 | A1 | 04 May 2017 |
| | | | | US | 9964707 | B2 | 08 May 2018 |

Form PCT/ISA/210 (patent family annex) (July 2022)

**EP 4 528 360 A1**

**REFERENCES CITED IN THE DESCRIPTION**

**Patent documents cited in the description**

- CN 202210674358